# EUROPÄISCHE PATENTANMELDUNG

(11) **EP 0 897 735 A1**
(43) Veröffentlichungstag der Anmeldung: **24.02.1999**
(21) Anmeldenummer: 98115313.3
(22) Anmeldetag: 14.08.1998
(51) Int. Cl.: B01D 17/02

(54) **Verfahren sowie Anlage zur thermischen Trennung einer Wasser-/Ölemulsion**

(30) Priorität: 21.08.1997 DE 19736281
(71) Anmelder: Hopf, Karl-Heinz, D-95448 Bayreuth (DE)
(72) Erfinder: Hopf, Karl-Heinz, D-95448 Bayreuth (DE)
(74) Vertreter: Stippl, Hubert

(57) **Zusammenfassung**

Die Erfindung betrifft Verfahren sowie eine Anlage zur thermischen Phasentrennung eines Flüssigkeitsgemisches, insbesondere einer Wasser-/Ölemulsion, bei der in einem ersten Verfahrensschritt das Flüssigkeitsgemisch in einem Behälter erhitzt wird, in einem zweiten Verfahrensschritt Luft in den Behälter eingeleitet wird, so daß sich verteilte Luftbläschen bilden, die das gesamte Volumen des Flüssigkeitsgemisches durchströmen. In einem dritten Verfahrensschritt erfolgt eine Abführung und Kondensation des oberhalb des Flüssigkeitsgemisches entstehenden Wasserdampfes während in einem vierten Verfahrensschritt die Luft nach der Kondensation durch ein Gebläse und eine Rohranordnung über einen geschlossenen Kreislauf wieder in den Behälter eingeleitet wird, wobei nach der Kondensation des Wasserdampfes eine Erwärmung und Trocknung der Luft erfolgt.

## Beschreibung

Die Erfindung betrifft ein Verfahren zur thermischen Phasentrennung eines Flüssigkeitsgemisches, insbesondere einer Wasser-/Ölemulsion mit den Merkmalen des Oberbegriffs des Patentanspruchs 1. Ferner betrifft die Erfindung eine zugehörige Anlage zur thermischen Phasentrennung eines Flüssigkeitsgemisches nach dem Oberbegriff des Patentanspruchs 17.

In der EP 0 439 731 wird ein Verfahren zur thermischen Trennung einer Emulsion beschrieben, bei dem durch verteilte Einleitung von Luft in die Emulsion Wasserdampfschwaden gebildet werden, über welche der Wasser/Ölemulsion das Wasser durch nachfolgende Kondensation des Wasserdampfes entzogen wird.

Beim dortigen Verfahren wird zur Erhitzung der Emulsion im Behälter ein von der Emulsion umgebenes Heizelement verwendet, an dem während des Betriebs unerwünschte Ablagerungen auftreten können.

Der Erfindung liegt die Aufgabe zugrunde, ein Verfahren sowie eine zugehörige Anlage zur thermischen Trennung eines Flüssigkeitsgemisches anzubieten, bei dem derartige unerwünschte Ablagerungen an in die Emulsion hineinragenden Heizelementen vermieden werden.

Die Aufgabe wird hinsichtlich des Verfahrens durch den kennzeichnenden Teil des Patentanspruchs 1 gelöst. Vorteilhafte Verfahrensvarianten werden durch die Unteransprüche 2 - 16 realisiert. Für die Anlage wird die Aufgabe durch den kennzeichnenden Teil von Patentanspruch 17 gelöst. Vorteilhafte Ausführungsformen der Anlage werden in den Unteranspüchen 17 - 23 beschrieben.

Das erfindungsgemäße Verfahren vermeidet die unerwünschten Ablagerungen an dem im Flüssigkeitsgemisch befindlichen Heizelement, indem zusätzlich oder ausschließlich zur Erwärmung des Flüssigkeitsgemisches die durch das Flüssigkeitsgemisch hindurchgeleitete Luft verwendet wird. Letztere wird nach der Kondensation des Wasserdampfes erwärmt und getrocknet.

Durch alleinige oder zumindest zusätzliche Aufheizung des Flüssigskeitgemisches durch die eingeleitete Luft kann das Heizelement entlastet werden, so daß die störenden Ablagerungen in geringerem Umfang oder überhaupt nicht auftreten.

In einer vorteilhaften Verfahrensvariante erfolgt die Erwärmung und Trocknung der Luft direkt nach der Kondensation des Wasserdampfes und vor der Einleitung der Luft in das Gebläse. Somit wird getrocknete Luft durch das Gebläse hindurchgeleitet, wodurch sich die Lebensdauer des Gebläses erhöht.

Zur energetischen Verknüpfung des Wärmeteils (Heizelement) und Kältebereichs (Kondensator) des erfindungsgemäßen Verfahrens wird vorteilhafterweise eine Wärmepumpe als besonders energiesparendes Aggregat eingesetzt.

In einer besonders vorteilhaften Ausbildung des Verfahrens wird die Wärmepumpe auch dazu verwendet, neben der Speisung des Heizelementes und des Kondensators auch die zur Erwärmung und Trocknung der Luft nach der Kondensation des Wasserdampfes benötigte Energie bereitzustellen.

Hierdurch werden sämtliche beim erfindungsgemäßen Verfahren benötigten Energieformen zentral und besonders energiesparend von der Wärmepumpe zur Verfügung gestellt.

Vorzugsweise wird das Flüssigkeitsgemisch im Behälter auf 45 - 55° C erhitzt, wodurch im Vergleich zu Verfahren nach dem Stand der Technik, die in einem Temperaturbereich von etwa 85 - 90° C arbeiten, ein hochwertigeres Kondensat ohne Ölbestandteile erzeugt wird.

In einer weiteren vorteilhaften Verfahrensvariante wird die nach der Kondensation erhitzte Luft auf ein Temperaturbereich von 40 - 55° C erhitzt, um hierdurch eine entsprechende Trocknung der Luft zu erreichen und eine Erwännung des Flüssigkeitsgemisches im Behälter zu bewirken.

Durch Erzielung eines Luftfeuchtigkeitsgehalts von 15 - 30 % nach Erwärmung und Trocknung der Luft nach der Kondensation kann insbesondere bei einer Lufterwarmung direkt vor dem Gebläse ein ausreichender Lufttrocknungsgrad erreicht werden, um eine schonende Beaufschlagung des Gebläses mit getrockneter Luft sicherzustellen.

Vorteilhafterweise wird über die Temperatureinstellung bei der Erwärmung der Luft nach der Kondensation, die über das Gebläse in das Flüssigkeitsgemisch eingeleitete Luft zur Steuerung oder Regelung der Temperatur des Flüssigkeitsgemisches verwendet. Gegebenenfalls kann durch im Behälter angebrachte Temperatursensoren zur Erfassung der Temperatur des Flüssigkeitsgemisches eine Regelung und Einhaltung einer gewünschten Betriebstemperatur realisiert werden.

Durch Steuerung der das Gebläse durchsetzenden Menge von getrockneter Luft besteht eine weitere Möglichkeit der Temperaturbestimmung des Flüssigkeitsgemisches des Behälters. Vorteilhafterweise wird beim Einsatz einer Wärmepumpe das erfindungsgemäße Verfahren in einer Aufheizphase durch eine einseitig betriebene Wärmepumpe zur Erwärmung und Aufheizung des Flüssigkeitsgemisches betrieben.

Nach Erreichen einer einstellbaren Betriebstemperatur des Flüssigkeitsgemisches wird die Wärmepumpe umgeschaltet und zweiseitig sowohl zur Kühlung (als Kodensator) als auch zur Erwärmung (über das Heizelement und/oder zur Lufterwärmung) verwendet.

Eine weitere vorteilhafte Verfahrensvariante sieht vor, die in dem Behälter eingeleitete Luft im Bodenbereich des Behälters, insbesondere über eine flächig verteilte Rohranordnung mit einzelnen Austrittsöffnungen einzuleiten, wodurch der gesamte Bodenbereich des Behälters zur Einbringung der Luft verwendet wird und das gesamte Behältervolumen von aufsteigenden Luftbläschen durchströmt wird.

Indem die in den Behälter zurückgeführte Luft oberhalb des Flüssigkeitsspiegels des Flüssigkeitsgemisches eingedüst wird, kann ein einfaches Gebläses verwendet werden.

Durch Einleitung der Luft im Bereich des Behälters, in welchem sich das Heizelement befindet, kann durch die auftretenden Verwirbelungen Ablagerungen auf dem Heizelement vorgebeugt werden.

Ein zusätzlich eingesetztes Rührwerk trägt zur Vermischung des Flüssigkeitsgemisches im Behälter bei und sorgt für die Ausbildung einer gleichmäßigen Temperatur im Behälter. Außerdem wird den unerwünschten Ablagerungen am Heizelement entgegengewirkt.

Das erfindungsgemäße Verfahren kann vorteilhafterweise ohne Erzeugung einer Unterdruck- oder Vakuumsituation bei Umgebungsdruck durchgeführt werden.

Bei der erfindungsgemäßen Anlage zur thermischen Phasentrennung eines Flüssigkeitsgemisches, insbesondere einer Wasser-/Ölemulsion nach dem erfindungsgemäßen Verfahren ist ein Heizelement vorgesehen, welches nach der Kondensation des Wasserdampfes eine Lufterwärmung und/oder - trocknung vornimmt.

Diese Lufterwärmung/-trocknung erfolgt vorteilhafterweise vor der Zuführung der Luft in das Gebläse, um durch Einführung getrockneter Luft in das Gebläse dessen Lebensdauer zu erhöhen.

Vorteilhafterweise weist die erfindungsgemäße Anlage eine Wärmepumpe auf, welche sowohl zur Erwärmung des Flüssigkeitsgemisches im Behälter als auch zur Erzeugung der erforderlichen Kälte zur Kondensation des Wasserdampfes verwendet wird und darüber hinaus in einer besonders vorteilhaften Ausführungsform auch Wärme zur Erhitzung und Trocknung der Luft bereitstellt. Besonders in der letztgenannten Ausführungsform kann ein energetisch besonders günstiger Einsatz der Wärmepumpe realisiert werden und es kann auf ein separates Heizelement zur Lufterwärmung/-trocknung teilweise oder vollständig verzichtet werden.

Bei der räumlichen Ausgestaltung der erfindungsgemäßen Anlage umfaßt ein erster Anlagenteil vorteilhafterweise den Behälter mit dem Flüssigkeitsgemisch und es ist ein zweiter Anlagenteil vorgesehen welcher zur Kondensation und nachfolgenden Erhitzung der Luft dient. Diese beiden Anlagenteile können separat und als Module hergestellt und verbaut werden.

In einer besonders vorteilhaften Ausführungsform der Anlage wird der zweite Anlagenteil neben dem ersten Anlagenteil zur Erzielung einer geringen Bauhöhe aufgestellt.

Durch Einsatz eines Tauchrohres wird der im oberen Bereich des ersten Anlagenteils entstehende Wasserdampf in den Unterbereich des neben dem ersten Anlagenteil angeordneten zweiten Anlagenteils überführt, um dort zunächst kondensiert und dann erhitzt zu werden. Das Gebläse kann auf dem jeweils niedrigeren der beiden Anlagenteile angebracht werden, um insgesamt eine geringe Bauhöhe der nebeneinander aufgestellten Anlagenteile zu erreichen.

Vorteilhafterweise erlaubt die erfindungsgemäße Anlage aufgrund der Einspeisung von getrockneter Luft in das Gebläse die Verwendung eines Seitenkanalgebläses, welches einen niedrigen Energieverbrauch, einen nahezu lineare Kennlinie sowie eine einfache Regelung ermöglicht. Derartige Seitenkanalgebläse werden vorzugsweise zur Förderung von Luft mit geringer Feuchtigkeit eingesetzt.

Die Erfindung ist anhand eines Ausführungsbeispiels in der Zeichnungsfigur naher erläutert. Die Zeichnungsfigur zeigt ein Systemschaltbild der erfindungsgemäßen Anlage, an dem auch der Ablauf des Verfahrens erläutert werden kann.

In dem Behälter 1 befindet sich das zu trennende Flüssigkeitsgemisch, welches durch das Heizelement 2 erhitzt wird. Im unteren Bereich des Behälters 1 werden über eine Zuführung 3 die aufsteigenden Luftbläschen eingespeist. Es entsteht im oberen Bereich 9 des Behälters 1 Wasserdampf der über das Tauchrohr 12 vom ersten Anlagenteil 10 in den zweiten Anlagenteil 11 zur Kondensation im Kondensator 4 überführt wird. Daraufhin tritt Luft durch ein Heizelement 5 und wird hierdurch erwärmt und getrocknet, um danach - gefördert über das Gebläse 6 - wieder im Bodenbereich des Behälters 1 im ersten Anlagenteil 10 über die Zuführung 3 dem Flüssigkeitsgemisch zugeführt zu werden.

Das Heizelement 5 - oder ein zusätzliches Heizelement - kann bei einem feuchtigkeitsunempfindlichen Gebläse 6 auch nach dem Gebläse 6 allein - oder zusätzlich - zur Aufheizung des Flüssigkeitsgemisches eingesetzt werden (nicht abgebildet).

Die durch das Heizelement 5 erwärmte Luft dient somit durch Regelung der Temperatur des Heizelementes 5 zur Temperaturbestimmung des Flüssigkeitsgemisches im Behälter 1 und entlastet somit das Heizelement 2 zumindest teilweise.

Durch Einstellung der Förderleistung des Gebläses 6 und der Temperatur im Heizelement 5 kann die Anpassungsgeschwindigkeit und die jeweilige anzustrebende Temperatur des Flüssigkeitsgemisches im Behälter 1 (in frei regelbarer und wählbarer Kombination mit dem Heizelement 2) eingestellt werden.

Über die Wärmepumpe 7 werden sämtliche von der Anlage benötigten Energieformen, nämlich die Wärme für das Heizelement 2, die Kälte für den Kondensator 4 sowie die Wärme für das Heizelement 5 besonders energiesparsam bereitgestellt.

In einer weiteren Variante der Anlage kann das Heizelement 5 auch durch eine separate Wärmeversorgung gespeist werden (nicht abgebildet).

Durch eine in die Wärmepumpe 7 integrierte Steuerung, welche auch die Ausgangssignale von im Behälter 1 angebrachten Temperatursensoren 13 erfaßt, kann frei wählbar oder durch ein vorgegebenes Programm bestimmt werden, welcher Anteil der in das Flüssigkeitsgemisch des Behälters 1 eingebrachten Wärmemenge über das Heizelement 2 oder über das Heizelement 5 eingespeist wird.

Das Heizelement 2 kann somit in frei wählbarem Umfang zur Vermeidung unerwünschter Ablagerungen durch eine entsprechende Mehrleistung des Heizelementes 5 entlastet werden.

Eine Durchmischung zur Erzielung einer gleichmäßigen Erwärmung und zur Vermeidung von Ablagerungen am Heizelement 2 wird durch das Rührwerk 14 bewirkt.

Zur Unterstützung der Wärmepumpe 7 bei der Aufheizung des Flüssigkeitsgemisches im Behälter 1 kann zusätzlich eine (elektrische) Anfahrheizung 8 verwendet werden.

### BEZUGSZEICHEN

- 1: Behälter
- 2: Heizelement
- 3: Zuführung
- 4: Kondensator
- 5: Heizelement
- 6: Gebläse
- 7: Wärmepumpe
- 8: Anfahrheizung
- 9: oberer Bereich
- 10: erster Anlagenteil
- 11: zweiter Anlagenteil
- 12: Tauchrohr
- 13: Temperatursensor
- 14: Rührwerk

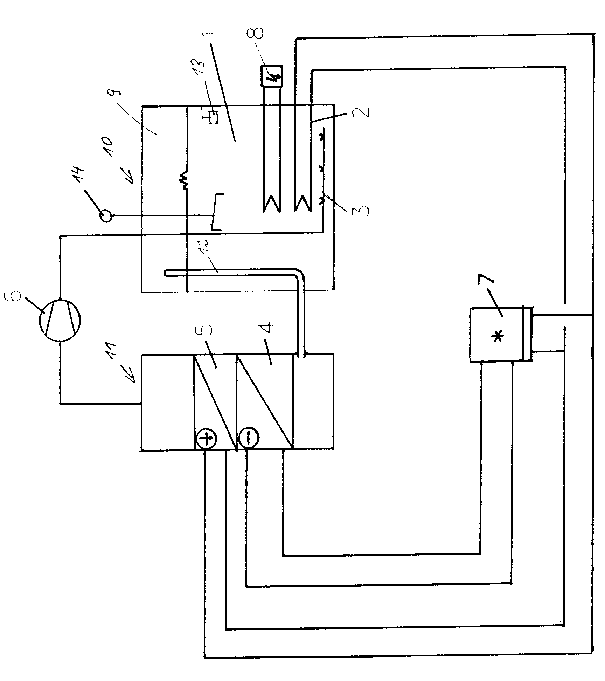

## Patentansprüche

1. Verfahren zur thermischen Phasentrennung eines Flüssigkeitsgemisches, insbesondere einer Wasser-/Ölemulsion, bei dem
- das Flüssigkeitsgemisch in einem Behälter erhitzt wird,
- Luft in den Behälter eingeleitet wird, so daß sich verteilte Luftbläschen bilden, die das Volumen des Flüssigkeitsgemisches durchströmen,
- eine Abführung und Kondensation des oberhalb des Flüssigkeitsgemisches entstehenden Wasserdampfes erfolgt sowie
- die Luft nach der Kondensation durch ein Gebläse und eine Rohranordnung über einen geschlossenen Kreislauf wieder in den Behälter eingeleitet wird,
**dadurch gekennzeichnet, daß**
nach der Kondensation des Wasserdampfes und vor der Zuführung der Luft zum Behälter eine Erwärmung und Trocknung der Luft erfolgt.

2. Verfahren nach Anspruch 1,
**dadurch gekennzeichnet, daß**
die Erwärmung und Trocknung der Luft nach der Kondensation des Wasserdampfes und vor der Zuführung zum Gebläse erfolgt.

3. Verfahren nach Anspruch 1 oder 2,
**dadurch gekennzeichnet, daß**
zur Erhitzung des Flüssigkeitsgemisches in dem Behälter und zur Kondensation des Wasserdampfes eine Wärmepumpe verwendet wird.

4. Verfahren nach einem der Ansprüche 1 - 3,
**dadurch gekennzeichnet, daß**
die Erwärmung und Trocknung der Luft nach der Kondensation durch ein separates Heizelement erfolgt.

5. Verfahren nach einem der Ansprüche 1 - 4,
**dadurch gekennzeichnet, daß**
die Erwärmung und Trocknung der Luft nach der Kondensation durch die Wärmepumpe erfolgt.

6. Verfahren nach einem der Ansprüche 1 - 5,
**dadurch gekennzeichnet, daß**
eine Erhitzung der Emulsion im Behälter auf 45 - 55° C erfolgt.

7. Verfahren nach einem der Ansprüche 1 - 6,
**dadurch gekennzeichnet, daß**
eine Erhitzung der Luft nach der Kondensation des Wasserdampfes auf 40 - 55° C erfolgt.

8. Verfahren nach einem der Ansprüche 1 - 7,
**dadurch gekennzeichnet, daß**
die Luft nach der Erhitzung einen Luftfeuchtigkeitsgehalt von 15 - 30 % aufweist.

9. Verfahren nach einem der Ansprüche 1 - 8,
**dadurch gekennzeichnet, daß**
eine Steuerung oder Regelung der Temperatur des Flüssigkeitsgemisches im Behälter über die unterschiedliche Erhitzung der Luft nach der Kondensation des Wasserdampfes erfolgt.

10. Verfahren nach einem der Ansprüche 1 - 9,
**dadurch gekennzeichnet, daß**
die Steuerung oder Regelung der Temperatur des Flüssigkeitsgemisches durch die über das Gebläse in den Behälter eingeleitete Luftmenge erfolgt.

11. Verfahren nach einem der Ansprüche 1 - 10,
**dadurch gekennzeichnet, daß**
beim Aufheizen der Emulsion die Wärmepumpe einseitig zur Aufheizung betrieben wird und nach Erreichung einer einstellbaren Betriebstemperatur der Emulsion eine Umschaltung der Wärmepumpe auf zweiseitigen Betrieb mit zusätzlicher Kühlung und Kondensation des Wasserdampfes erfolgt.

12. Verfahren nach einem der Ansprüche 1 - 11,
**dadurch gekennzeichnet, daß**
die Luft im Bodenbereich des Behälters, insbesondere über eine flächig verteilte Rohranordnung mit einzelnen Austrittsöffnungen, eingeleitet wird.

13. Verfahren nach einem der Ansprüche 1 - 12,
**dadurch gekennzeichnet, daß**
die Luft zumindest teilweise oberhalb des Flüssigkeitsgemisches in den Behälter eingeleitet wird.

14. Verfahren nach einem der Ansprüche 1 - 13,
**dadurch gekennzeichnet, daß**
die Luft im Bereich des Heizelementes in den Behälter eingeleitet wird.

15. Verfahren nach einem der Ansprüche 1 - 14,
**dadurch gekennzeichnet, daß**
über ein Rührwerk im Behälter eine Durchmischung des Flüssigkeitsgemisches erfolgt.

16. Verfahren nach einem der Ansprüche 1-15,
**dadurch gekennzeichnet, daß**
bei der Durchführung des Verfahrens Umgebungsdruck vorliegt.

17. Anlage zur thermischen Phasentrennung eines Flüssigkeitsgemisches insbesondere einer Wasser/Ölemulsion, nach einem Verfahren nach einem der Ansprüche 1 - 16, mit
- einem Heizelement zur Erhitzung des Flüssigkeitsgemisches in dem Behälter,
- einer Zuführung zur Einleitung von Luft in den Behälter,
- einem Kondensator zur Kondensation des innerhalb des Flüssigkeitsgemisches entstehenden Wasserdampfes und
- einem Gebläse zur Wiedereinleitung der Luft nach Kondensation in den Behälter,
**dadurch gekennzeichnet, daß**
ein Heizelement (5) zur Erwärmung und Trocknung der Luft nach der Kondensation des Wasserdampfes vorgesehen ist.

18. Anlage nach Anspruch 17,
**dadurch gekennzeichnet, daß**
ein Heizelement (5) zur Erwärmung und Trocknung der Luft nach der Kondensation des Wasserdampfes und vor der Zuführung zum Gebläse (6) vorgesehen ist.

19. Anlage nach Anspruch 17 oder 18,
**dadurch gekennzeichnet, daß**
eine Wärmepumpe (7) zur Erhitzung des Flüssigkeitsgemisches im Behälter (1), zur Kondensation des Wasserdampfes und/oder zur Erwärmung und Trocknung der Luft nach der Kondensation vorgesehen ist.

20. Anlage nach einem der Ansprüche 17 - 19,
**dadurch gekennzeichnet, daß**
ein erster Anlagenteil (10) den Behälter (1) umfaßt und ein zweiter Anlagenteil (11) zur Kondensation und nachfolgenden Erwärmung der Luft dient.

21. Anlage nach Anspruch 20,
**dadurch gekennzeichnet, daß**
der erste Anlagenteil (10) und der zweite Anlagenteil (11) nebeneinander angeordnet sind.

22. Anlage nach Anspruch 20 oder 21,
**dadurch gekennzeichnet, daß**
der erste Anlagenteil (10) und der zweite Anlagenteil (11) über ein Tauchrohr (12) zur Überführung des Wasserdampfes vom ersten Anlagenteil (10) in den zweiten Anlagenteil (11) in Verbindung stehen.

23. Anlagen nach einem der Ansprüche 17 - 22,
**dadurch gekennzeichnet, daß**
das Gebläse (6) als Seitenkanalgebläse ausgebildet ist.
